Europäisches Patentamt

(19) European Patent Office (11) Publication number: **0 001 481**

Office européen des brevets **B1**

(12) **EUROPEAN PATENT SPECIFICATION**

(45) Date of publication of patent specification: **07.07.82** (51) Int. Cl.³: **B 60 T 8/22, F 16 K 1/44**

(21) Application number: **78300380.9**

(22) Date of filing: **13.09.78**

(54) Variable load valve apparatus with load independent initial pressure output in a braking system.

(30) Priority: **30.09.77 GB 4067077**

(43) Date of publication of application:
**18.04.79 Bulletin 79/8**

(45) Publication of the grant of the patent:
**07.07.82 Bulletin 82/27**

(84) Designated Contracting States:
**DE FR NL SE**

(56) References cited:
**DE - A - 1 755 021**
**DE - A - 2 724 945**
**DE - U - 1 920 916**

(73) Proprietor: **BENDIX LIMITED**
**Douglas Road**
**Kingswood, Bristol BS15 2NL (GB)**

(72) Inventor: **Christmas, Michael Charles**
**Bendix Westinghouse Limited Douglas Road**
**Kingswood Bristol BS15 2NL (GB)**

(74) Representative: **Turner, Alan Reginald**
**c/o Bendix Limited Douglas Road**
**Kingswood, Bristol BS15 2NL (GB)**

Variable load valve apparatus with load independent initial pressure output in a braking system

This invention relates to variable load valve apparatus and braking systems with inshot and relates especially but not exclusively to a braking system employing a variable load valve for adjusting the degree of braking in a road vehicle dependent upon the loading of the vehicle.

In fluid operable vehicle braking systems it has been proposed to employ load-proportioning valve means which operate in accordance with a signal related to the load carried by the vehicle for proportioning in accordance with load the pressure delivered to vehicle brake actuators from or in response to brake valve output.

In such a system, operating under light load conditions, the pressure delivered may be low in relation to the force needed to overcome the return springs and frictional resistance in the actuators and it has been proposed to provide "inshot" pressure in such a system whereby an initial load-independent component of pressure is produced up to a given value of pressure.

The Specification of German Offenlegungsschrift 27 24 945 describes such a variable load valve apparatus which has graduating means operable after the attainment of the said given value of pressure to progressively remove the load-independent component of pressure as the output pressure is further increased.

By providing such graduating means, the advantage is gained that, especially for low values of load, the provision of such inshot pressure is less detrimental to the effective operating ratio of the variable load valve apparatus.

However, the apparatus described in the said German Offenlegungsschrift has been found to lack a desired degree of precision of operation and is highly susceptible to manufacturing tolerances.

The present invention provides variable load valve apparatus for a fluid pressure vehicle braking system including a variable load valve for adjusting the ratio of fluid pressure at an output port in relation to fluid pressure at an input port in accordance with a load-dependent input, the apparatus also including further valve means operable to provide a further input pressure to the variable load valve to cause said variable load valve to produce an initial pressure output independent of the load-dependent input up to a predetermined value of the further input, the further valve means including a double valve controlled by a biassed pressure-responsive means having a first area acted upon by the further pressure and a second area acted upon by a braking pressure signal characterised in that the second area is an area of substantially smaller periphery than the first area.

In order that the invention may be more clearly understood and readily carried into effect,

the same will be further described by way of example, with reference to the accompanying drawings, of which:—

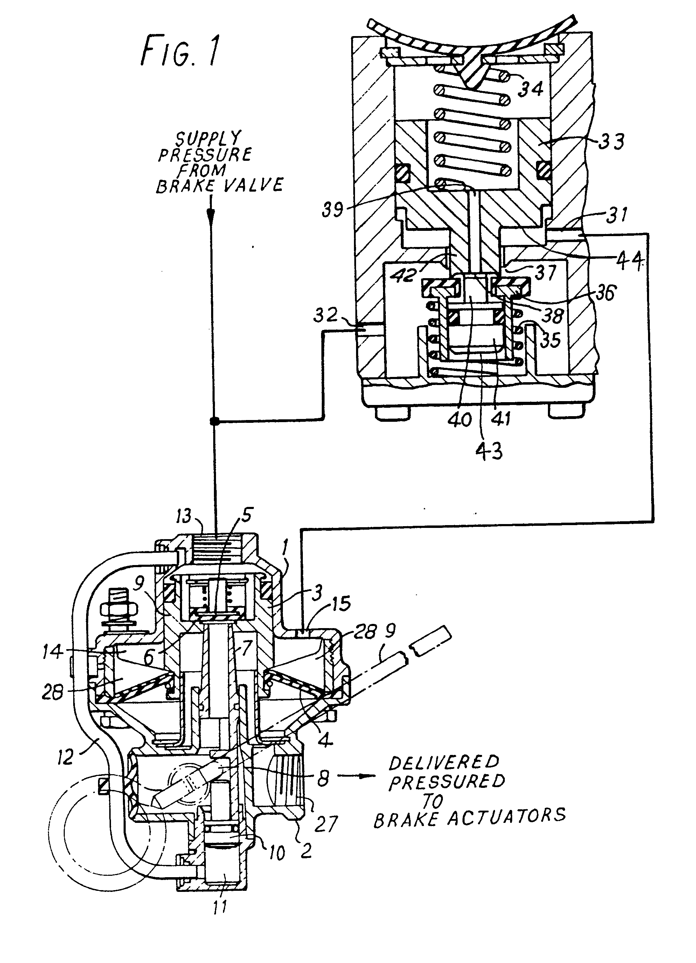

Fig. 1 illustrates in diagrammatical form a variable load valve of known form, together with an inshot valve connected to the variable load valve to enable the variable load valve to provide inshot and

Fig. 2 illustrates graphically the effect on the variable load valve output of inshot employing an inshot valve in accordance with the present invention.

Referring to the drawing, the variable load valve is constructed with upper and lower body members denoted by references 1 and 2 respectively and which are bolted together to include a control piston 3, a flexible diaphragm 4 and a valve arrangement comprising a springloaded valve member 5 which normally engages against a seat 6 and is further engageable by an internal tubular member 7 which is sealingly slideable in the lower body member and is engageable in turn with a ball pivot 8 carried by a pivoted lever 9 positioned by vehicle load. The member 7 is clamped when a brake application is made, by virtue of pressure being applied beneath a piston 10 in a cylinder 11 which is connected via an external pipe 12 to the brake supply input port 13 which is above the normally closed valve 5. The control piston 3 carries radially extending fingers such as the finger 14 which move between corresponding fingers 28 against which the diaphragm rests in the position shown, the arrangement being such that on downward movement of the piston, the diaphragm is increasingly engaged by the radial fingers 14 and decreasingly engaged by the inwardly projecting fins 28 such that the effect of pressure beneath the diaphragm on the piston arrangement, increases the greater the downward deflection of the piston. A similar such arrangement is previously described in the Specification of British Patent No. 1029183 and need not be further described herein.

Referring now to the further valve arrangement which may be referred to as an inshot valve, for the purposes of connecting this to the variable load valve, a further port is connected to the region of the body of the variable load valve which is above the diaphragm 4 and this port, denoted by reference 15, is connected to an output port 31 of the inshot valve. Additionally, the inshot valve has a supply and control input port reference 32. The inshot valve itself includes a piston 33, with a pressure responsive area 44 having a downwardly extending valve part 42, and is biassed downwards by a spring 34 against the upward force created by pressure at port 31 and by the thrust of a light spring 35 acting on a valve member 36. The valve member 36 forms part of a double valve and can seat against an input valve seat 37 and an exhaust valve seat 38 carried by valve part 42, the output side of which communicates with atmosphere via a central bore 39. Mechanically engageable via a rod 40 with the part 42, there is a piston 41 which is sealingly slideable within the sleeve of valve 36 which forms a cylinder for the piston 41 which has a smaller pressure responsive area 43. The periphery of the piston 41 which is subjected to the pressure applied at the input port 32, is only a fraction of the periphery of the piston 33 which is subjected to the output pressure presented via port 31.

Whilst not shown in the drawing, the variable load valve receives a brake pressure at port 13 from a reservoir via a driver's brake valve which is usually a foot-operated valve. The pressure delivered at the port 27 is applied to the brake actuators and in the case of there also being a trailer vehicle, possibly to a relay valve which controls trailer service brakes.

Referring briefly to the operation of the variable load valve itself, when a brake application is made, air at the supply pressure is applied via the input port 13 to the chamber above the valve 5 causing downward deflection of the piston 3. At the same time, there is a flow of air from the port 13 to the cylinder 11 so that the piston 10 is upwardly deflected to clamp the ball pivot against the internally slideable stem 7 by virtue of which the movable parts within the arrangement are responsive only when braking pressures are supplied and thereby avoiding unnecessary wear. Since the valve is supported by the tubular stem 7, downward deflection of the piston 3 unseats the valve 5 from its seat 6, permitting brake supply air to pass to the brake actuators via the variable load valve output port denoted by reference 27. At the same time, this pressure is presented to the region beneath the diaphragm 4 by a passage which is not readily seen in the drawing. Furthermore, as the piston is downwardly deflected, the diaphragm moves away from the fixed support of the inwardly directed fingers carried by the housing and becomes the more partially supported by the fingers such as 14 carried by the piston. This modifies the effective area of the diaphragm supported by the moving piston until the force beneath the diaphragm which depends upon the pressure and effective area, equalises with the force acting above the piston. At this point, the valve 5 reseats with seat 6 and a balance is achieved with a lower pressure at 27 than that which is applied at 13, keeping the valve assembly in the lapped condition with the input and exhaust ways via the valve 5 closed. The pressure which this has obtained depends upon the position of the lever 9 and therefore upon the loading of the vehicle. When the brakes are released, the pressure in the port 27, which is applied to the brake actuators, lifts the piston, thereby unseating the valve 5 from the internal tubular stem 7 to result in venting of the pressure from 27 to atmosphere through the centre of the tube 7 until a pressure is re-achieved or total release is obtained.

In the foregoing, the fact of a further input pressure applied from the further valve to above the diaphragm 4, has been ignored for the sake of initial understanding. With increasing supply pressure at the input port 32 of the inshot valve starting from a zero pressure, an identical increase of output pressure occurs by virtue of the communication between port 32 and port 31 via the uncovered valve seat 37. With increasing such pressure, acting both on the area 43 of the piston 41 and the area 42 of the piston 33, the bias spring 34 is progressively deflected up to a predetermined value of input pressure at which the valve member 36 seats against the valve seat 37. This determines the amount of initial fluid pressure into the brake actuators which can occur quite independently of the operation of the variable load valve. Following this point, with increasing pressure from the foot valve at the input port 32, whilst the communication between the area of the valve 33 and input port 32 has been closed off by the seating of the valve member 36 on the seat 37, the area 43 of the piston 41 continues to be in communication with the input port 32 and on further deflection of the spring 34, the pressure in the chamber 28 above the diaphragm of the variable load valve, is progressively vented by the unseating of valve seat 38 with the valve member 36. The valve member 36 and seats 37 and 38 therefore operate as a self-lapping double valve and the pressure at port 31 is progressively reduced with increasing supply pressure from the brake valve.

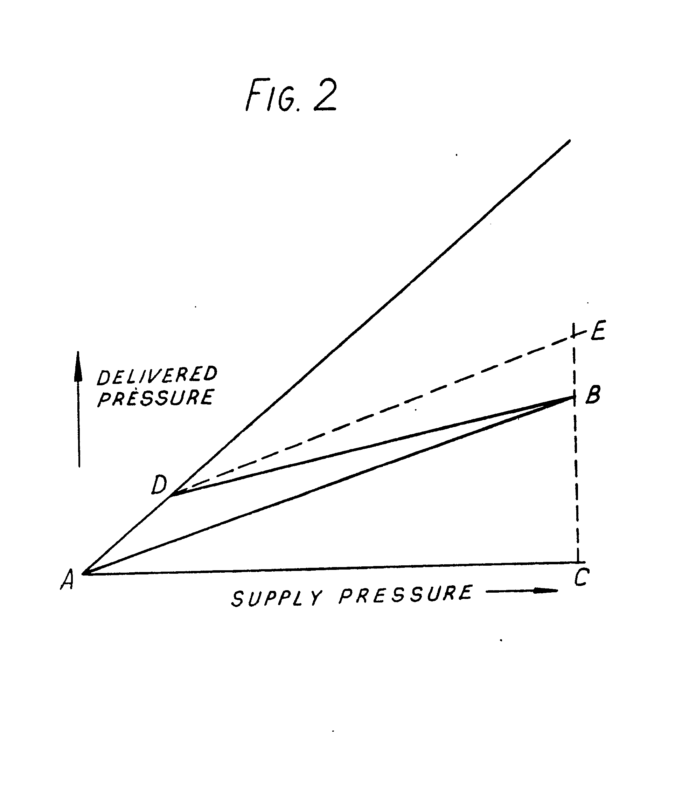

In the graphical illustration in Fig. 2, curve ADB is a typical representation of the relationship of the delivered pressure at port 27 relative to the supply pressure at port 13 from the driver's brake valve for a given load setting of the variable load valve. The further pressure at the port 31, gives rise to pressure corresponding to the portion AD of the graph shown in Fig. 2 which is independent of the load setting. For a given value of load, and therefore of position of the lever 9, the output of the port 27 varies thereafter with supply pressure according to portion DB of the curve. The point B is the point corresponding to load-proportioned supply pressure achieved by virtue of the graduable venting of the initial further pressure above the diaphragm of the variable load valve over the range of operation following the point D. For the purpose of comparison, the curve ADE illustrates the output which would occur in the event that the further pressure above the diaphragm 4 were not so graduably removed but maintained through the range of operation. The reduction of the effective ratio of the variable load valve especially for light loads, which can result without the said graduable venting is therefore quite appreciable.

In the foregoing, the further valve which is operable to provide an initial range of pressure output independent of the load-dependent signal, (namely, the position taken up by the lever 9) receives the variable load valve input pressure to cause the inshot component at port 15 to be progressively reduced as described above. Nevertheless, it may be appreciated that as in the case of the apparatus or system as described in the abovementioned German Offenlegungsschrift, an alternative pressure (instead of the variable load valve input) may be applied to such a further valve to achieve a similar result. For example, the delivered pressure of the variable load valve at port 27 may be used to cause this graduable reduction of the further pressure. It will be understood that appropriate adjustment of the relative dimensions of the piston 33 and the piston 41 of the further valve may be required.

In the Specification of the aforementioned German Offenlegungsschrift it is stated that the further valve which is called an inshot valve therein may be arranged to receive a pressure other than that which is presented to the input of the variable load valve. It is stated for example that the pressure which appears at the output of the variable load valve may itself be used as an input to the inshot valve, it being understood that appropriate adjustments of the dimensions of the piston may be required. In a similar manner, in the case of the further valve of the present invention, the input port 32 may be arranged to derive its input pressure from the delivery port 27 of the variable load valve.

Again, in Fig. 2, the further pressure which is applied in the variable load valve above the variable effective area diaphragm, is represented as being graduably released up to the point B of full braking. If desired, this may be arranged to occur at an earlier point on the characteristic of Fig. 2 by reducing the effective area of the piston 41 in relation to that of piston 33.

Whilst in the foregoing, the operation of the variable load valve has been described in the context of a single or tractor vehicle, the variable load valve may be employed on a trailer or semi-trailer vehicle and be supplied with fluid pressure from a trailer service brake control line when connected to a tractor and thereby control the tractor brakes in dependence upon load.

## Claims

1. Variable load valve apparatus for a fluid pressure vehicle braking system including a variable load valve (1, 2) for adjusting the ratio of fluid pressure at an output port (27) in relation to fluid pressure at an input port (13) in accordance with a load-dependent input, the apparatus also including further valve means operable to provide a further input pressure to the variable load valve to cause said variable load valve to produce an initial pressure output independent of the load-dependent input up to a predetermined value of the further input, the further valve means including a double valve (36, 37, 38) controlled by a biassed pressure responsive means (33, 41) having a first area acted upon by the further pressure and a second area acted upon by a braking pressure signal characterised in that the second area (43) is an area of substantially smaller periphery than the first area (44).

2. Variable load valve apparatus as claimed in Claim 1, characterised by the pressure responsive means comprising a first piston (33) having an extension (42) through the double valve engageable with a second piston (41) via means (40) passing through the double valve (36).

3. Variable load valve apparatus as claimed in Claim 2, characterised in that the second piston is sealingly slideable in a sleeve integral with the double valve (36).

4. Variable load valve apparatus as claimed in Claim 3, characterised in that the sleeve is biassed by a spring (35) towards the first piston.

5. Variable load valve apparatus as claimed in Claim 1, 2, 3 or 4, characterised in that said second area is acted upon by the pressure at said input port.

## Revendications

1. Dispositif à soupape de charge variable pour circuit de freinage pour véhicules à pression hydraulique comprenant une valve de charge variable (1,2) destinée à ajuster le rapport de pression du fluide une lumière de sortie (27) par rapport à la pression du fluide à une lumière d'entrée (13) en accord avec une entrée fonction de la charge, ledit dispositif comprenant également un autre dispositif à soupape agissant pour produire une pression d'entrée supplémentaire au niveau de la valve de charge variable afin que celle-ci produise une sortie de pression initiale indépendante de l'entrée fonction de la charge jusqu'à une valeur prédéterminée de l'entrée supplémentaire, ledit autre dispositif à soupape comprenant une double soupape (36,37,38) commandée par un organe de tarage sensible à la pression (33, 41) comportant une première surface sur laquelle la pression supplémentaire agit et une second surface sur laquelle un signal de pression de freinage agit, caractérisé par le fait que la seconde surface (43) a une périphérie essentiellement plus faible que la première surface (44).

2. Dispositif à soupape de charge variable, conforme à la revendication 1, caractérisé par le fait que l'organe sensible à la pression comprend un premier piston (33) muni d'un prolongement (42) traversant la double soupape, pouvant s'engager sur un second piston (41) par l'intermédiaire d'un organe (40) qui traverse la double soupape (36).

3. Dispositif à soupape de charge variable conforme à la revendication 2, caractérisé par le fait que le second piston peut coulisser de façon étanche dans une chemise solidaire de la double soupape (36).

4. Dispositif à soupape de charge variable conforme à la revendication 3, caractérisé par le fait que la chemise est sollicitée par un ressort (35) vers le premier piston.

5. Dispositif à soupape de charge variable conforme à l'une des revendications 1, 2, 3 ou 4, caractérisé par le fait que la seconde surface est soumise à l'action de la pression agissant sur la lumière d'entrée.

## Patentansprüche

1. Lastabhängige Ventilvorrichtung für ein mit strömungsfähigem Medium beaufschlagtes Fahrzeugbremssystem, mit einem lastabhängigen Ventil (1, 2) zum Einstellen des Verhältnisses des Mediumdruckes an einer Auslassöffnung (27) zum Mediumdruck an einer Einlassöffnung (13) in Uebereinstimmung mit einem lastabhängigen Einlass, wobei die Vorrichtung ferner Ventilmittel aufweist, um dem lastabhängigen Ventil einen weiteren Einlassdruck zuzuleiten, damit dieses lastabhängige Ventil einen anfänglichen Auslassdruck liefert, welcher vom lastabhängigen Einlass bis zu einem bestimmten Wert am Einlass unabhängig ist, wobei die Ventilmittel ein Doppelventil (36, 37, 38) umfassen, das durch ein vorgespanntes, druckgesteuertes Organ (33, 41) gesteuert wird, welches eine erste Fläche aufweist, auf welche der weitere Druck einwirkt, sowie eine zweite Fläche, auf die ein Bremsdrucksignal einwirkt, dadurch gekennzeichnet, dass die zweite Fläche (43) einen beträchtlich kleineren Umfang aufweist, als die erste Fläche (44).

2. Lastabhängige Ventilvorrichtung nach Anspruch 1, dadurch gekennzeichnet, dass das druckgesteuerte Organ einen ersten Kolben (33) aufweist, dessen Verlängerung (42) durch das Doppelventil mit einem zweiten Kolben (41) mittels eines Organes (40) in Wirkungsverbindung steht, das sich durch das Doppelventil (36) hindurch erstreckt.

3. Lastabhängige Ventilvorrichtung nach Anspruch 2, dadurch gekennzeichnet, dass der zweite Kolben gleitend und dicht in einer Büchse gelagert ist, welche mit dem Doppelventil (36) ein einziges Teil bildet.

4. Lastabhängige Ventilvorrichtung nach Anspruch 3, dadurch gekennzeichnet, dass die Büchse durch eine Feder (35) vorgespannt ist, welche sie gegen den ersten Kolben zu drücken trachtet.

5. Lastabhängige Ventilvorrichtung nach Anspruch 1, 2, 3 oder 4, dadurch gekennzeichnet, dass auf die genannte zweite Fläche der Druck an der genannten Einlassöffnung einwirkt.

FIG. 1

SUPPLY
PRESSURE
FROM
BRAKE VALVE

DELIVERED
PRESSURED
TO
BRAKE ACTUATORS

FIG. 2